# EUROPEAN PATENT SPECIFICATION

(11) **EP 0 591 005 B1**
(45) Date of publication and mention of the grant of the patent: **10.04.1996**
(21) Application number: 93307833.9
(22) Date of filing: 01.10.1993
(51) Int. Cl.: B65B 25/00

(54) **Automated line and method for preparing premade food set-ups**
Fertigungsstrasse und Herstellung von belegten Speisen (z. B. Sandwich)
Chaîne de fabrication et fabrication de mets garnis (par exemple de canapés)

(30) Priority: 01.10.1992 US 955092
(43) Date of publication of application: 06.04.1994
(73) Proprietor: OSCAR MAYER FOODS CORPORATION, Madison, Wisconsin 53704 (US)
(72) Inventor: Daane, Larry Edward, Horicon, Wisconsin 53032 (US); Rattmann, James Allen, Sun Prairie, Wisconsin 53590 (US); Jonovic, John Anthony, Fitchburg, Wisconsin 53711 (US)
(74) Representative: Eyles, Christopher Thomas

(56) References cited:
- US-A- 4 230 007
- US-A- 5 051 268
- US-A- 5 230 267

## Description

### Background and Brief Description of the Invention

The present invention generally relates to automated devices and methods for the preparation of food items and, more specifically, to devices and methods for the automated preparation of layered stacks of one or more food items (hereinafter "set-ups") such as sandwich meats, hors d'oeuvre servings and the like. The invention provides a method and apparatus for the large-scale preparation of set-ups made with one or more food products. Each set-up is made of layered sliced stacks of food products. The method and apparatus of the invention can make the individual layers of the set-up with more than one type of sliced food item and with the slices arranged in a preferred pattern within a single horizontal plane. Set-ups made by the invention are automatically wrapped in paper and stacked with like set-ups for subsequent packaging and shipment. The invention is particularly useful in the commercial manufacture of sandwich set-ups made with one or more sliced meats or cheeses such as those used in making so-called "sub" sandwiches, for example.

The fast food industry has generally enjoyed continued growth in recent years and has seen a sustained demand by consumers for quick and efficient service and good product quality. Improvements in products and services as well as the introduction of new products has been necessary to capture market share and attain a comfortable profit margin in an increasingly competitive industry. Controlling costs, while providing a quality product and service, is a continuing concern within the industry. Food service providers have worked to control costs by controlling the size of the food portions in meal items served to customers. Carefully controlling the amount of meat and other materials used in sandwich set ups, for example, helps to control the overall cost in making and serving various sandwiches. While optimum control over portion sizes would best be achieved using automated machinery with readily reproducible equipment settings, the art has failed to provide such machinery for the manufacture of set-ups to duplicate the arrangement and selection of food items found in hand-made or manually assembled set-ups.

In controlling costs, industry generally strives to utilize its work force as efficiently as possible. In the food services industry, the preparation of set-ups has required a rather inefficient use of labor since the manual production of set-ups has typically been labor intensive, often requiring the dedicated attention and efforts of one or more individuals. Automation of a large scale set-up preparation process would allow the food service retailer to obtain premade set-ups, allowing for a more efficient use of labor by freeing individuals from time-intensive manual set-up preparation. In this manner workers would be able to dedicate more time to other important duties such as customer service, for example.

The present invention overcomes the shortcomings of the art by providing a mechanized system and method for the automated assembly of set-ups for distribution to individual vendors. The system is an automated assembly-line including a plurality of slicers for slicing meat, cheese and like products and depositing those sliced products onto a conveyor line. Timing mechanisms are provided so that the food items from successive slicers are deposited on the conveyor in close proximity to the slice or slices from preceding food slicers to form a plurality of premade sandwich set-ups, each set-up composed of a pattern of layered horizontally spaced food slices. The set-ups are stacked and then packaged for shipment to food service retailers for making sandwiches such as "submarine" type sandwiches, hors d'oeuvre servings and the like.

The system includes a paper roll supply and paper feed system from which a continuous sheet or web of paper is carried down a conveyor line through a plurality of slicer stations. Each slicer station deposits slices of one or more food items onto the conveyed web to thereby form a single layer of horizontally spaced slices. These slices are then conveyed to the next slicer station where another layer of food slices is deposited on top of the previous layer. As each set-up is conveyed down the conveyer line, each subsequent slicer station adds an additional layer of food to the set-up. The completed set-up is conveyed to a cutting station where the paper roll is automatically cut so that a portion of the paper can be used to cover and protect the set-up. The covered set-up is conveyed to a stacking station and the stacked set-ups are then conveyed to a packaging station where they are packaged for commercial shipment.

It is an object of the present invention to provide an apparatus and method for the automated manufacture of premade food set-ups.

It is another object of the present invention to provide an apparatus for the assembly of premade food setups wherein the apparatus includes a plurality of slicers which are arranged and timed to deposit sliced food product onto a conveyor at predetermined intervals to thereby assemble predetermined arrangements of food product to form a finished set-up.

It is still another object of the present invention to provide means for automatically stacking and packaging the premade set-ups once they have been assembled.

These and other objects of the present invention are attained by the system according to claim 1 and the method according to claim 9. They will become more apparent to those skilled in the art upon consideration of the remainder of the disclosure including the drawings and the detailed description of the preferred embodiment.

### BRIEF DESCRIPTION OF THE DRAWINGS

Figure 1 is a top plan view of an apparatus for the assembly of premade food set-ups according to the present invention.

Figure 2 is a side elevational view of an apparatus for the assembly of premade food set-ups, according to the present invention.

Figure 3 is a top plan view, in schematic, illustrating the assembly of a set-up.

Figure 4 is another top plan view, in schematic, showing the assembly of a set-up in six stages.

Figure 5 is a perspective view of a slicer used in the apparatus of the present invention.

Figure 6 is a front elevational view of a paper cutter/wrapper station for use in the present invention.

Figure 7 is a top plan view, in section, of the cutter/wrapper station of Figure 6.

Figure 8 is a side elevational view, in section, of the cutter/wrapper station of Figures 6 and 7 and illustrating the wrapper folding components thereof.

### DETAILED DESCRIPTION OF THE PREFERRED EMBODIMENT

The present invention provides a mechanized system and a method for the large scale production of setups by utilizing a plurality of slicer stations positioned along a conveyor line to deposit a patterned array of layered food slices onto the conveyor, each successive slicer depositing a new patterned layer onto the layer deposited by the preceding slicer. In describing the preferred embodiment of the system and method, reference will be made to the various figures wherein like reference numerals indicate like components.

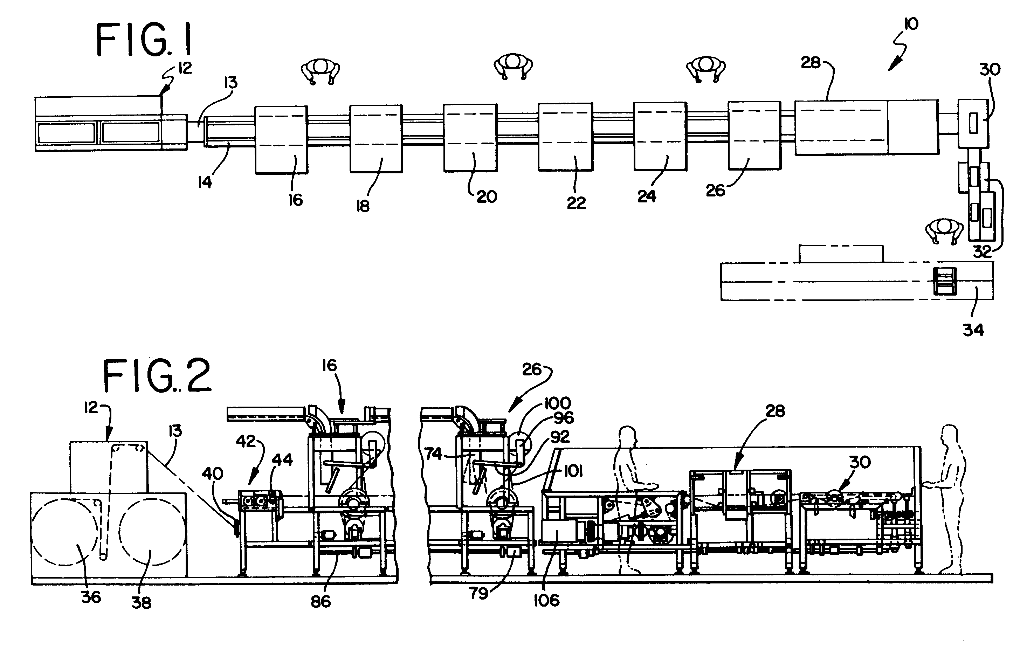

Referring now to the various figures, Figure 1 illustrates the mechanized system 10 for the automated assembly of food set-ups in accordance with the present invention. The system 10, shown in schematic in Figure 1, includes a paper supply 12 to supply a continuous sheet or web of paper 13 to a conveyor assembly including a conveyor 14 which extends down through a plurality of slicer stations 16-26. Each slicer station, as discussed below, deposits a layer of one or more food slices onto the paper 13 as it progresses downstream on conveyor 14. In this manner, a set-up is assembled in the form of several layers of food slices wherein each layer is composed of horizontally spaced slices arranged in a predetermined pattern. It will be appreciated that the number of slicer stations in the system 10 can be varied to include any number of two or more stations. The six stations 16-26 in the preferred embodiment has been most useful in the preparation of set-ups for "sub" sandwiches and the like.

The conveyor 14 transports each set-up to a cutter/wrapper station 28. The cutter/wrapper station is equipped with a paper cutter to slice the continuous sheet 13 to predetermined lengths with each such length being sufficient to hold one set-up thereon and including a flap of excess paper. Preferably, the flap is long enough to be folded back over the set-up so that the set-ups can subsequently be stacked with the folded paper separating the individual set-ups and providing a means for the sanitary handling of individual set-ups such as when a set-up is eventually included in a sandwich, for example. The system 10 includes a wrapper assembly to fold excess paper 13 over each of the set-ups to thereby wrap the setup prior to stacking. A stacker station 30 stacks the wrapped set-ups and conveys them on to a checkweigher 32 and from the checkweigher to a packaging station 34 where the set-ups are packaged for commercial shipment.

As mentioned, the system 10 is provided with a plurality of slicer stations to provide the desired number of different layers of food slices in the assembled setups. Each of the slicer stations are preferably equipped to deposit more than one food slice onto the paper 13 as it is conveyed by conveyor 14. Consequently, each slicer may be equipped to provide slices of one or more different types of meat, cheese and the like.

As shown in Figure 2, the paper supply 12 is a paper roll stand accommodating a feed roll 36 and a spare roll 38 to facilitate changing paper supplies when the feed roll 36 is spent. In the preferred embodiment, the paper supply 12 is a combined splicer and paper roll stand unit, capable of automatically splicing in a new roll of paper at the end of the roll in service. Commercially available units, like those available from Serco USA, are adequate. The paper 13 is fed from the feed roller 36 onto the conveyor 14 through a paper guide roller 40 and a paper feeder 42, including nip rollers 44 for guiding the paper 13 onto the conveyor line 14. The paper 13 proceeds from the paper feeder 42 through nip rollers 44 down the conveyor line 14 and through the slicer stations 16-26.

Beginning with the first slicer station 16, each food set-up is assembled by compiling multiple layers of food slices to include a variety of foods such as various meats, cheeses or combinations thereof and the like. Each of the slicer stations is preferably capable of depositing more than one slice onto the paper 13. In this manner, each slicer station in the system 10 can deposit a separate layer of horizontally spaced food slices on the paper web 13, thereby building layers of food slices as the set-up advances downstream on the conveyor 14 through the individual slicer station 16-26.

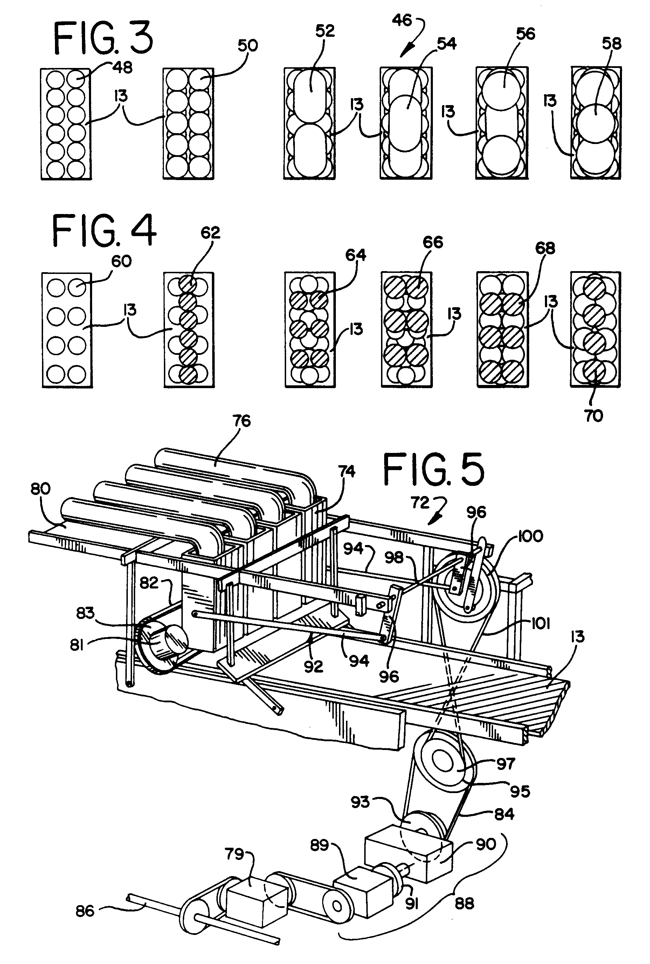

With particular reference to Figure 3, a single set-up 46 is shown in various degrees of assembly. The first layer 48 of food slices are deposited on the paper 13 by first slicer station 16. As shown, the multiple food slices of the first layer 48 are deposited by the slicer station 16 onto the paper 13 in a horizontally spaced relationship. As the web 13 is carried downstream, the first layer 48 is similarly advanced and is conveyed through the second slicer station 18 where the second layer of food 50 is deposited onto the paper 13 and over the first layer 48. Most preferably, the slicer stations and the conveyor 14 are appropriately synchronized so that the second layer 50 lays directly on top of the first layer. Like the first layer 48, the second layer 50 includes horizontally spaced food slices which lie approximately within a single horizontal plane. As the set-up is conveyed further through the system 10, a third layer of food 52 is deposited thereon by slicer station 20 and is again deposited in a horizontally spaced relationship. In the embodiment herein, the third layer 52 consists of two slices of food. The next slicer station 22 similarly deposits the fourth layer 54 of food slices onto the set-up and subsequent slicer stations 24, 26 similarly deposit additional layers of food slices 56 and 58, respectively.

For illustrative purposes, Figure 4 shows a somewhat different arrangement of food slices in a second set-up composed of a variety of food. Again, the first layer 60 is deposited by slicer station 16 and the subsequent layers of food slices 62, 64, 66, 68, and 70 are similarly deposited by slicer stations 18, 20, 22, 24 and 26, respectively. It will be understood that Figures 3 and 4 provide only two examples of many possible set-up arrangements. Those skilled in the art will understand that various different arrangements of food placement onto the paper 13 are possible, limited only by the selection of food items and the capacity of the slicers stations 16-26. The slicers are preferably capable of depositing more than one food item onto the paper 13 and the number of items which can be deposited by each of the individual slicers is limited by the capacity of the slicer as well as the size of the food casings, as discussed below.

Regarding the individual slicer stations, each station is preferably equipped with an assembly 72, as shown in Figure 5. The assembly 72 is mounted over the conveyor assembly 14 and the paper 13 conveyed thereon. The assembly 72 is of known construction, and commercial slicers such as those available from J.E. Grote Pepp-A-Matic Co., Inc. of Columbus, Ohio are suitable. As shown one or more moveable canisters 74 each receive an elongated cylinder or log of food product 76 such as cheese, meat and the like. Each of the log 76 is vertically oriented and held within a canister 74. The canisters 74 are supported by a frame assembly 78 which is also equipped with a tray 80 to support the uppermost portions of the food products 76 as well as providing an area for the temporary storage of refill food products.

The frame assembly 78 supports the canisters 74 to allow the bottoms thereof to simultaneously move above a slicer blade 82 positioned beneath the canister in a closely spaced relation thereto. Each log 76 projects slightly beneath the bottom of its canister 74 to allow the blade 82 to slice the food product and to have the food slices fall onto the paper web 13 in a predetermined pattern. As shown, the blade 82 provides a constant cutting motion to the food products by rotation around a pair of blade pulleys 83 and driven by motor 81 at a constant and predetermined rate of speed. In this manner, the blade 82 operates like a band saw, providing a cutting surface to quickly and easily slice through a plurality of food logs 76 within the canisters 74.

The canisters 74 are driven by an oscillating cable drive which is powered by the line shaft 86 or the like by the operation of a drive assembly. The line shaft 86 rotates at a constant velocity, preferably about 900 rpm, to drive the conveyor assembly 14 in a known manner at a velocity of about 27 inches per second (about 68.6 centimetres per second). The line shaft 86 also drives the drive assembly preferably through a conventional cable and pulley connection to a gear box 79 to reduce the rotational drive of line shaft 86 from about 900 rpm to about 600 rpm. The drive assembly 88 directs the rotational input from the line shaft 86 and the aforementioned gear box through phaser 89 and an air clutch 91 to an oscillator 90 which operates in a known manner to convert the constant rotational input to an oscillating output. The rotational input into oscillator 90 from the air clutch 91 is preferably about 150 rpm which is translated into an oscillating motion of about 21.52 degrees, through oscillator 90, to a cable pulley 93 which is associated with an overload clutch (not shown). Cable 84 is reeved around an oscillating drive pulley 93 and the large diameter driven pulley 95. The drive pulley 93 is driven by oscillator 90 at an appropriate rate of oscillation. A smaller diameter cable pulley 97 is associated with the driven pulley 95 to drive the cable pulley 100 with associated cable 101.

Through the aforementioned arrangement of parts, the cable drive 84 drives a linkage assembly 92 and, the linkage assembly 92 moves the canisters 74 across the slicer blade 82 with a velocity of about 150 oscillations per minute to cut and place a food slice precisely onto the partially assembled set-up from the preceding slicer station, supplying about 150 set-ups per minute.

The linkage assembly 92, shown in Figure 5, includes tierods 94, each of which is secured at one end to the canister 74 and at its other end to a lever arm 96. Each lever arm 96 is secured to a rotatably mounted shaft 98. The cable pulley 100 is mounted on the rotatably mounted shaft 98 at one end thereof and, transmits the oscillating motion from the oscillator 90 to the shaft 98.

To assure synchronized operation of the various slicer stations, each station is preferably driven from a single drive assembly which can include a motor 106 to drive a common drive unit such as the line shaft 86. Phasers and reducers are preferably included within the drive chain as discussed to achieve desired timing and sequencing of the particular slicer stations.

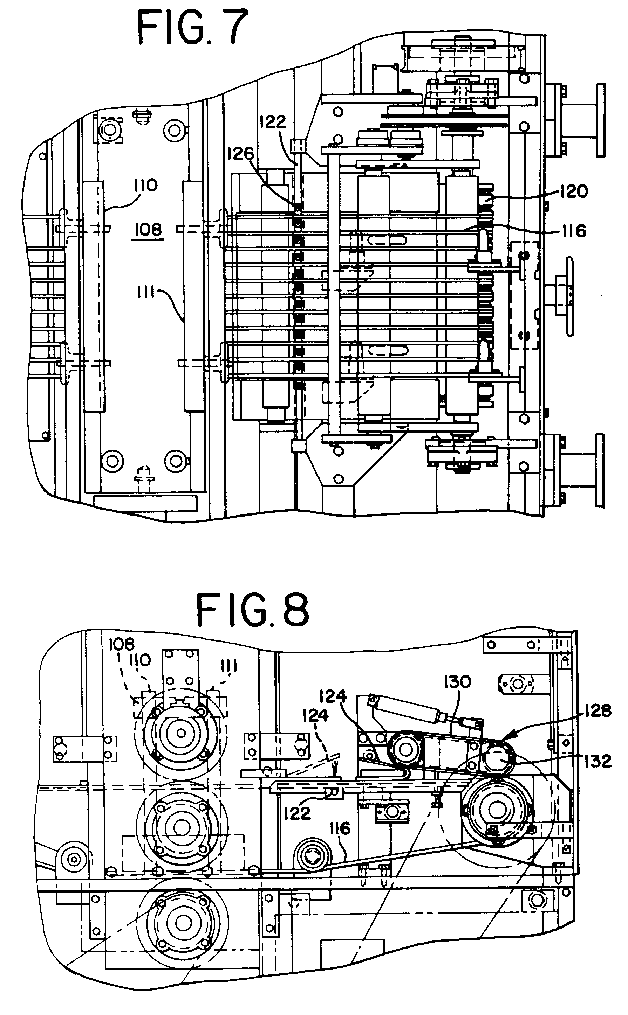

Once assembled by the slicer stations, each setup is conveyed to the cutter/wrapper station 28 which, with some modification, is of a design known to those in the art. The cutter/wrapper station 28 cuts the web 13 in front of the set-up, leaving a flap 124 (Figure 8) of paper to extend forwardly beyond the set-up. As described below, the station 28 includes a wrapper portion which wraps the forward flap back over the set-up for the stacking and subsequent handling thereof.

The cutter/wrapper station 28 includes a knife assembly 108 having a cutting blade 110 and a perforating blade 111 mounted on a top plate 112. The portion of the conveyor extending through the cutter/wrapper station and beneath the knife assembly 108 is separate from the portion of the conveyor 14 extending through slicer stations 16-26. Through the cutter/wrapper station 28, set-ups are conveyed on a conveyor portion having a plurality of urethane belts 116 which are reeved around a drive roller 120 and a series of idler rollers in a known manner and driven by the drive assembly 106 and the line shaft 86 so that the speed of the belts 116 is substantially the same as the speed for the conveyor 14 extending through the slicer station 16-26. The belts 116 extend under the knife assembly 108 through slots 113 in a bottom plate 114. The slots 113 provide each of the belts 116 with a recessed track to protect the belts from the guillotine action of the knife assembly 108 and the consequent undesired slicing of the belts 116.

The knife assembly 108 cuts and scores the paper web 13 and is synchronously driven by the line shaft 86 to operate in concert with the belts 116 as well as the slicer station 16-26. In this manner, the cutting blade 110 first cuts the web 13 in front of each set-up before the set-up has passed under the cutting blade, leaving a leading flap 124 in front of the set-up. Preferably, the length of the flap 124 will roughly correspond with the length of the set-up, as measured along the longitudinal axis of the conveyor 14. Preferably, this length will be between about 4 and about 8 inches (between about 10.16 and about 20.32 cm) and, most preferably, between about 5 and about 6 inches (between about 12.70 and about 15.24 cm) and roughly corresponding to the length between the cutting blade 110 and the perforating blade 111.

Following the initial cut of the web 13, the knife assembly 108 is raised and the web and set-up continue to advance along the conveyor belts 116, next passing underneath the knife assembly 108. Once the setup has passed the vertical plane of the cutting blade 110 so that the set-up is approximately centered between the cutting blade and the perforating blade 111, the knife assembly 108 will again descend so that the cutting blade 110 cuts the web 13 a second time directly behind the setup thereby separating that set-up from the other set-ups still being conveyed through the slicer stations 16-26. The perforating blade 111 simultaneously scores the paper in front of the leading edge of the set-up to provide a folding line for the flap 124.

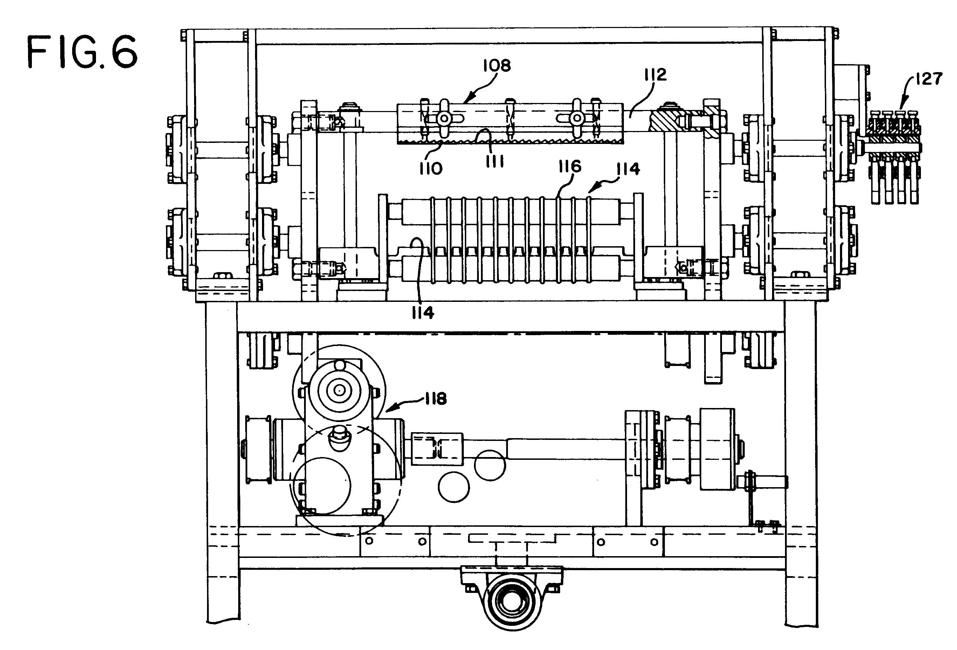

While the knife assembly 108 is still in its lowered position, the flap 124 is positioned over an air supply 122 extending beneath the belts 116 and supplying an upwardly directed stream of air from a series of individual openings 126 between the belts 116. The stream of air from the openings 126 of air supply 122 lifts the flap 124 while the perforating knife 111 is still applying pressure on the web 13. A series of proximity switches 127 (Figure 6) are provided to control the air supply 122, cycling the air supply on while the flap 124 is positioned over the openings 126 and cycling off again before the set-up passes over the openings 126. In this manner, the upwardly directed stream of air will raise the flap 124 but provides no lifting force underneath the individual set-ups, thereby avoiding any alteration of the orientation of the set-ups as they are conveyed along the urethane belts 116. Use of the proximity switches 127 to cycle the air supply is accomplished in a known manner. In this arrangement, the air supply will lift the flap 124 from its horizontal orientation on the belts 116 to a vertically inclined position above the plane of the conveyor belts. The flap 124 is vertically inclined from the score line created by the perforating knife 111 to its leading edge, substantially as shown in phantom in Figure 8.

With the flap 124 raised and the air supply cycled off, the set-up and flap 124 are advanced along the belts 116 to the folding roller 128 including a belt 130 conveyed around rollers 132. The folding roller 128 is positioned over the urethane belts 116 leaving sufficient space therebetween to allow the set-up to pass under the roller 128 and onto the stacker assembly 30. The speed of the folding roller 128 is synchronized with that of the belts 116. In the view shown in Figure 8, the belt 130 is driven around the rollers 132 in a counterclockwise rotation. In this manner, the vertically inclined flap 124 encounters the belt 130 and, as the set-up advances along the belts 116, the flap 124 is folded over the setup by the belt 130 to cover the set-up and thereby provide separation between the individual set-ups when stacked at stacker station 30 and, perhaps more importantly, to also provide a means for the sanitary handling of the individual set-ups when they are subsequently included in sandwiches by a food service retailer, for example.

The folded set-ups are conveyed to the stacker station 30 and on to the checkweigher 32 and the packaging station 34 for packaging of the set-ups for commercial shipment thereof. The checkweigher 32 and packaging assembly 34 are commercially available and well known to those skilled in the art. Both the cutter/wrapper station 28 and the stacker assembly 30 are driven by the line shaft 86, cycling on at any time the line shaft is turning. Preferably, the stacker assembly 30 is equipped with a reject system of a known design. A diverter system is preferably provided opposite the reject unit and is used to shift between two stackers. The stacker assembly used in the system of the present invention includes a photosensor control (not shown) wherein a photosensor eye is used to actuate the reject system along with a reject button. A second set of photosensors is located at the diverter to count set-ups and a third set of photosensors is located in front of the stacker shelves and used to move the shelf down at the correct time.

While a preferred embodiment of the invention has been described along with a preferred method for the automated formation of set-ups, those skilled in the art will understand that the described embodiment can be modified by those skilled in the art without departing from the scope of the invention, as defined in the following claims.

## Claims

1. A mechanized system (10) for the automated preparation of food set-ups (46), comprising:
a conveyor assembly (14) having a feed end and a discharge end thereon;
first slicer means (16) and second slicer means (18) sequentially positioned along said conveyor assembly (14) for sequentially providing food slices, said first slicer means (16) capable of depositing a first layer of food slices (48; 60) onto said conveyor assembly substantially within a first horizontal plane, said second slicer means (18) positioned along said conveyor assembly (14) and downstream of said first slicer means (16), said second slicer means (18) capable of providing a second set of food slices (50; 62) substantially within a second horizontal plane;
drive means (88) for driving said conveyor assembly (14) and said slicer means (16, 18); and
timing means for synchronizing said first slicer means (16) and said second slicer means (18) and said conveyor assembly (14) so that said second set of food slices (50; 62) is supplied by said second slicer means (18) to lay over said first set of food slices (48; 60);
whereby, said first slicer means (16) and said second slicer means (18) compile a food set-up (46) having a plurality of stacked layers (48, 50; 60, 62) wherein each layer includes food slices arranged substantially within a single horizontal plane.

2. A system according to claim 1, further comprising:
a paper supply means (12) for supplying a continuous sheet or web of paper (13) onto said conveyor assembly (14), the feed end of said conveyor assembly (14) including feed means to feed said paper (13) from said paper supply (12) and onto said conveyor assembly (14); said first slicer means (16) being configured to deposit said first set of food slices (50; 62) onto said sheet or web of paper (13).

3. A system according to claim 2, further comprising:
cutting means (28) disposed downstream of said second slicer means (18) and along said conveyor assembly (14) for cutting said paper (13) to thereby separate each said set-up (46), said cutting means (28) being operatively associated with said timing means to cut said paper (13) to a predetermined length for each set-up (46), said cutting means (28) including a knife (108) positioned over said conveyor assembly (14) to slice said paper (13) as each said set-up (46) is conveyed thereunder, said knife (108) cutting said paper (13) to leave a flap (124) of paper of sufficient length to fold over said set-up (46);
wrapper means associated with said cutting means (28) to fold said flap (124) over said set-up (46);
stacking means (30) positioned downstream of said wrapper means to stack said set-up (46) after said flap (124) has been folded over said set-up (46); and
packaging means (34) associated with said stacking means (30) to package said set-up (46) after stacking thereof.

4. A system according to claim 3, wherein said wrapper means (28) further includes an air source (122) to supply an upwardly directed stream of air to lift said flap (124) and folding means (130) to fold said flap (124) over said set-up (46), said folding means (130) including a folding roller (128) positioned over said conveyor (14) to fold said flap (124) over said set-up (46) as said set-up (46) is conveyed along said conveyor assembly (14).

5. A system according to any one of claims 1 to 4, wherein said conveyor assembly (14) includes a continuous conveyor running from said first slicer means (16) to and away from said second slicer means (18).

6. A system according to any one of claims 1 to 5, wherein said drive means (88) is a line shaft drive (86) for simultaneously driving said conveyor assembly (14) and said slicer means (16, 18).

7. A system according to any one of claims 1 to 6, further comprising:
third slicer means (20), fourth slicer means (22), fifth slicer means (24) and sixth slicer means (26) sequentially positioned along said conveyor assembly (14) downstream of said second slicer means (18) for sequentially providing additional layers of food slices (52, 54, 56, 58; 64, 66, 68, 70), said third slicer means (20), fourth slicer means (22), fifth slicer means (24) and sixth slicer means (26) being configured to supply a third layer (52; 64), a fourth layer (54, 66), a fifth layer (56; 68) and a sixth layer (58; 70), respectively, so that each said layer lays substantially within a single horizontal plane on said setup (46).

8. A system according to any one of claims 1 to 7, wherein each slicer means (16, 18, 20, 22, 24, 26) further includes a moveable canister (74) mounted on a frame (72) and positioned above said conveyor assembly (14), said canister (74) being equipped to hold multiple food items therein, and a slicer blade (82) positioned beneath said canister (74) and above said conveyor assembly (14), said slicer blade (82) extending across said conveyor assembly (14) perpendicular to the path of travel thereof, said blade (82) being of sufficient length to simultaneously slice more than one food item within the canister (74).

9. A method for the automated preparation of food setups (46), comprising:
slicing a first set of food items at a first slicer station (16) to provide a first layer (48; 60) of food slices;
depositing said first layer (48; 60) onto a conveyor (14) and substantially within a first horizontal plane;
conveying said first layer (48; 60) to a second slicer station (18);
slicing a second set of food items at said second station (18) to form a second layer (50; 62) of food slices;
stacking said second layer (50; 62) directly over said first layer (48; 60) and substantially within a second horizontal plane;
wrapping said first and second layers (48, 50; 60, 62) following said stacking thereof; and
packaging said first and second layers (48, 50; 60, 62) following said wrapping thereof.

10. A method according to claim 9, wherein said slicing of said first set of food items includes loading one or more food items into a first canister (74), said first canister positioned over a first slicer blade (16) and moveable relative to a slicer blade (82);
positioning said food items within said first canister (74) in a side-by-side arrangement to expose one end of each said food item for slicing thereof by said slicer blade (82); and
slicing said one end of each said food item within said canister (74) to form said first layer (48; 60).

11. A method according to claim 9 or claim 10, wherein said conveying of said first layer (48; 60) to said second slicer station (18) is accomplished on a line shaft conveyor (14).

12. A method according to any one of claims 9 to 11, wherein said slicing of said second set of food items includes loading one or more food items into a second moveable canister, said second canister positioned over a second slicer blade and moveable relative to said slicer blade;
positioning said food items within said second canister in a side-by-side arrangement to expose one end of each said food item for slicing thereof by said second slicer blade;
slicing said one end of each said food item within said second canister to form said second layer (50; 62).

13. A method according to any one of claims 9 to 12, further comprising
providing a continuous web of paper (13);
conveying said continuous web of paper (13) on a conveyor line (14) to said first slicer station (16);
depositing said first layer (48; 60) onto said paper (13);
conveying said first layer (48; 60) and said paper (13) on said conveyor line (14) to said second slicer station (18) and depositing said second layer (50; 62) onto the first said layer (48; 60);
cutting said web of paper (13) to leave a flap (124) of said paper of sufficient length to be folded over said layers (48, 50; 60, 62) to provide a wrapper therefor; and
wrapping said layers (48, 50; 60, 62) with said paper following said cutting thereof.

14. A method according to claim 13, wherein said wrapping includes supplying an upwardly directed stream of air to raise said flap (124) from a substantially horizontal position to a vertically inclined position; and applying a roller (128) over said flap (124), said first layer (48; 60) and said second layer (50; 62) when said flap (124) is in said vertically inclined position to thereby fold said flap (124) over said layers (48, 50; 60, 62).

## Patentansprüche

1. Mechanisierte Anlage (10) für die automatisierte Zubereitung von belegten Speisen (z.B. Sandwich) (46) umfassend:
eine Fördererbaugruppe (14) mit einem Beschickungsende und einem Austragsende;
ein erstes Scheibenschneidmittel (16) und ein zweites Scheibenschneidmittel (18), die sequentiell an der genannten Fördererbaugruppe (14) entlang angeordnet sind, um sequentiell Nahrungsmittelscheiben vorzusehen, wobei das genannte erste Scheibenschneidmittel (16) zum Ablegen einer ersten Schicht von Nahrungsmittelscheiben (48; 60) im wesentlichen innerhalb einer ersten horizontalen Ebene auf die genannte Fördererbaugruppe fähig ist, das zweite Scheibenschneidmittel (18) an der genannten Fördererbaugruppe (14) entlang und dem ersten Scheibenschneidmittel (16) nachgeschaltet angeordnet ist und das genannte zweite Scheibenschneidmittel (18) zum Vorsehen eines zweiten Satzes Nahrungsmittelscheiben (50; 62) im wesentlichen innerhalb einer zweiten horizontalen Ebene fähig ist;
ein Antriebsmittel (88) zum Antreiben der genannten Fördererbaugruppe (14) und der genannten Scheibenschneidmittel (16, 18) und
ein Einstellungsmittel zum Synchronisieren des genannten ersten Scheibenschneidmittels (16) und des genannten zweiten Scheibenschneidmittels (18) und der genannten Fördererbaugruppe (14), so daß der genannte zweite Satz Nahrungsmittelscheiben (50; 62) vom genannten zweiten Scheibenschneidmittel (18) geliefert wird, um auf den ersten Satz Nahrungsmittelscheiben (48; 60) gelegt zu werden;
wodurch das genannte erste Scheibenschneidmittel (16) und das genannte zweite Scheibenschneidmittel (18) eine belegte Speise (46) mit einer Mehrzahl übereinander angeordneter Schichten (48, 50; 60, 62) zusammenstellen, wobei jede Schicht im wesentlichen innerhalb einer einzelnen horizontalen Ebene angeordnete Nahrungsmittelscheiben aufweist.

2. Anlage nach Anspruch 1, ferner umfassend:
ein Papierzufuhrmittel (12) für die Zufuhr einer kontinuierlichen Folie oder Papierbahn (13) auf die genannte Fördererbaugruppe (14), wobei das Beschickungsende der genannten Fördererbaugruppe (14) Zufuhrmittel zum Zuführen des genannten Papiers (13) von der genannten Papierzuführung (12) und auf die genannte Fördererbaugruppe (14) aufweist, wobei das genannte erste Scheibenschneidmittel (16) so konfiguriert ist, daß es den ersten Satz Nahrungsmittelscheiben (50; 62) auf die genannte Folie oder Papierbahn (13) ablegt.

3. Anlage nach Anspruch 2, ferner umfassend:
dem zweiten Scheibenschneidmittel (18) nachgeschaltetes und entlang der genannten Fördererbaugruppe (14) angeordnetes Schneidmittel (28) zum Schneiden des genannten Papiers (13), um dadurch die belegten Speisen (46) voneinander zu trennen, wobei das genannte Schneidmittel (28) funktionsmäßig dem genannten Einstellungsmittel zugeordnet ist, um das genannte Papier (13) auf eine vorbestimmte Länge für jede belegte Speise (46) zuzuschneiden, wobei das genannte Schneidmittel (28) ein über der genannten Fördererbaugruppe (14) angeordnetes Messer (108) aufweist, um das genannte Papier (13) jeweils durchzutrennen, wenn die genannte belegte Speise (46) unter ihm hindurchbefördert wird, wobei das Messer (108) das genannte Papier (13) so schneidet, daß eine Papierklappe (124) ausreichender Länge zum Falten um die genannte belegte Speise (46) vorgesehen wird;
ein dem genannten Schneidmittel (28) zugeordnetes Einpackmittel zum Falten der genannten Klappe (124) um die genannte belegte Speise (46);
ein dem genannten Einpackmittel nachgeschaltet angeordnetes Stapelmittel (30), um die genannte belegte Speise (46) zu stapeln, nachdem die genannte Klappe (124) um die genannte belegte Speise (46) gefaltet worden ist; und
ein dem genannten Stapelmittel (30) zugeordnetes Verpackungsmittel (34) zum Verpacken der genannten belegten Speise (46) nach dem Stapeln.

4. Anlage nach Anspruch 3, wobei das genannte Einpackmittel (28) auch eine Luftquelle (122) zum Liefern eines nach oben gerichteten Luftstrahls zum Hochklappen der genannten Klappe (124) und ein Faltmittel (130) zum Falten der genannten Klappe (124) um die genannte belegte Speise (46) aufweist, wobei das genannte Faltmittel (130) eine über dem genannten Förderer (14) positionierte Faltrolle (128) zum Falten der genannten Klappe (124) um die genannte belegte Speise (46), wenn die genannte belegte Speise (46) auf der genannten Fördererbaugruppe (14) entlangbewegt wird, hat.

5. Anlage nach einem der Ansprüche 1 bis 4, wobei die genannte Fördererbaugruppe (14) einen Dauerförderer aufweist, der vom genannten ersten Scheibenschneidmittel (16) zum genannten zweiten Scheibenschneidmittel (18) und von diesem weg läuft.

6. Anlage nach einem der Ansprüche 1 bis 5, wobei das genannte Antriebsmittel (88) ein Transmissionswellenantrieb (86) zum gleichzeitigen Antreiben der genannten Fördererbaugruppe (14) und der genannten Scheibenschneidmittel (16, 18) ist.

7. Anlage nach einem der Ansprüche 1 bis 6, ferner umfassend:
ein drittes Scheibenschneidmittel (20), ein viertes Scheibenschneidmittel (22), ein fünftes Scheibenschneidmittel (24) und ein sechstes Scheibenschneidmittel (26), welche dem genannten zweiten Scheibenschneidmittel (18) nachgeschaltet sequentiell an der genannten Fördererbaugruppe (14) entlang angeordnet sind, um sequentiell zusätzliche Schichten von Nahrungsmittelscheiben (52, 54, 56, 58; 64, 66, 68, 70) vorzusehen, wobei genanntes drittes Scheibenschneidmittel (20), viertes Scheibenschneidmittel (22), fünftes Scheibenschneidmittel (24) und sechstes Scheibenschneidmittel (26) konfiguriert sind, um eine dritte Schicht (52; 64), eine vierte Schicht (54, 66), eine fünfte Schicht (56; 68) beziehungsweise eine sechste Schicht (58; 70) zu liefern, so daß jede genannte Schicht im wesentlichen innerhalb einer einzelnen horizontalen Ebene der genannten belegten Speise (46) liegt.

8. Anlage nach einem der Ansprüche 1 bis 7, wobei jedes Scheibenschneidmittel (16, 18, 20, 22, 24, 26) auch einen beweglichen Behälter (74), der an einem Rahmen (72) montiert und über der genannten Fördererbaugruppe (14) positioniert ist, wobei der genannte Behälter (74) zum Aufnehmen mehrerer Nahrungsmittelartikel ausgestattet ist, und eine unter dem genannten Behälter (74) und über der genannten Fördererbaugruppe (14) positionierte Schneidklinge (82) aufweist, wobei die genannte Schneidklinge (82) senkrecht zur Laufbahn der genannten Fördererbaugruppe (14) über diese verläuft, wobei die genannte Klinge (82) lang genug ist, um gleichzeitig mehr als einen Nahrungsmittelartikel im Behälter (74) in Scheiben zu schneiden.

9. Verfahren für die automatisierte Zubereitung von belegten Speisen (z.B. Sandwich) (46) umfassend:
Schneiden eines ersten Satzes von Nahrungsmitteln an einer ersten Scheibenschneidstation (16) zum Vorsehen einer ersten Schicht (48; 60) von Nahrungsmittelscheiben;
Ablegen der genannten ersten Schicht (48; 60) auf einen Förderer (14) und im wesentlichen innerhalb einer ersten horizontalen Ebene;
Befördern der genannten ersten Schicht (48; 60) zu einer zweiten Scheibenschneidstation (18);
Schneiden eines zweiten Satzes von Nahrungsmitteln an der genannten zweiten Scheibenschneidstation (18) zum Bilden einer zweiten Schicht (50; 62) von Nahrungsmittelscheiben;
Stapeln der genannten zweiten Schicht (50; 62) direkt auf die erste Schicht (48; 60) und im wesentlichen innerhalb einer zweiten horizontalen Ebene;
Einpacken der genannten ersten und zweiten Schicht (48, 50; 60, 62) nach dem genannten Stapeln dieser; und
Verpacken der genannten ersten und zweiten Schicht (48, 60; 50, 62) nach dem genannten Einpacken dieser.

10. Verfahren nach Anspruch 9, wobei das genannte Schneiden des genannten ersten Satzes von Nahrungsmitteln das Laden eines oder mehrerer Nahrungsmittelartikel in einen ersten Behälter (74) umfaßt, wobei der genannte erste Behälter über einer ersten Schneidklinge (16) positioniert und im Verhältnis zu einer Schneidklinge (82) beweglich ist;
Anordnen der genannten Nahrungsmittel in einer nebeneinanderliegenden Anordnung in dem genannten ersten Behälter (74), um ein Ende jedes der genannten Nahrungsmittel zum Abschneiden von Scheiben davon mit der genannten Schneidklinge (82) freizulegen; und
Schneiden des genannten einen Endes jedes genannten Nahrungsmittelartikels im genannten Behälter (74), um die genannte erste Schicht (48; 60) zu bilden.

11. Verfahren nach Anspruch 9 oder Anspruch 10, wobei das genannte Befördern der genannten ersten Schicht (48; 60) zur genannten zweiten Scheibenschneidstation (18) auf einem Transmissionswellenförderer (14) erfolgt.

12. Verfahren nach einem der Ansprüche 9 bis 11, wobei das genannte Abschneiden des genannten zweiten Satzes von Nahrungsmittelartikeln das Laden eines oder mehrerer Nahrungsmittelartikel in einen zweiten beweglichen Behälter umfaßt, wobei der genannte zweite Behälter über einer zweiten Schneidklinge positioniert und im Verhältnis zur genannten Schneidklinge beweglich ist;
Anordnen der genannten Nahrungsmittelartikel in einer nebeneinanderliegenden Anordnung in dem genannten zweiten Behälter, um ein Ende jedes der genannten Nahrungsmittelartikel zum Abschneiden von Scheiben davon mit der genannten zweiten Schneidklinge freizulegen;
Abschneiden vom genannten einen Ende jedes genannten Nahrungsmittelartikels im genannten zweiten Behälter, um die genannte zweite Schicht (50; 62) zu bilden.

13. Verfahren nach einem der Ansprüche 9 bis 12, ferner umfassend:
Vorsehen einer kontinuierlichen Papierbahn (13);
Befördern der genannten kontinuierlichen Papierbahn (13) auf einer Fördererbaugruppe (14) zur genannten ersten Scheibenschneidstation (16);
Ablegen der genannten ersten Schicht (48; 60) auf das genannte Papier (13);
Befördern der genannten ersten Schicht (48; 60) und des genannten Papiers (13) auf der genannten Förderanlage (14) zur genannten zweiten Scheibenschneidstation (18) und Ablegen der genannten zweiten Schicht (50; 62) auf der ersten genannten Schicht (48; 60);
Schneiden der genannten Papierbahn (13), so daß eine Papierklappe (124) ausreichender Länge zum Falten um die genannten Schichten (48, 50; 60, 62) vorgesehen wird, um eine Verpackung dafür zu erhalten; und
Einpacken der genannten Schichten (48, 50; 60, 62) mit dem genannten Papier nach dem genannten Schneiden dessen.

14. Verfahren nach Anspruch 13, wobei die genannte Verpackung das Liefern eines nach oben gerichteten Luftstrahls zum Hochklappen der genannten Klappe (124) aus einer im wesentlichen horizontalen Position in eine vertikal geneigte Position und das Anwenden einer Rolle (128) auf die genannte Klappe (124), die genannte erste Schicht (48; 60) und die genannte zweite Schicht (50; 62), wenn sich die genannte Klappe (124) in der genannten vertikal geneigten Position befindet, um dadurch die genannte Klappe (124) um die genannten Schichten (48, 50; 60, 62) zu falten.

## Revendications

1. Système mécanisé (10) pour la préparation automatique de mets garnis (46), comprenant:
un ensemble de bande transporteuse (14) ayant une extrémité d'alimentation et une extrémité de décharge;
un premier moyen de découpage en tranches (16) et un deuxième moyen de découpage en tranches (18) placés en série le long dudit ensemble de bande transporteuse (14) pour fournir en série des tranches d'aliments, ledit premier moyen de découpage en tranches (16) étant capable de déposer une première couche de tranches d'aliments (48; 60) sur ledit ensemble de bande transporteuse sensiblement dans un premier plan horizontal, ledit deuxième moyen de découpage en tranches (18) étant placé le long dudit ensemble de bande transporteuse (14) et en aval dudit premier moyen de découpage en tranches (16), ledit deuxième moyen de découpage en tranches (18) étant capable de fournir un deuxième ensemble de tranches d'aliments (50; 62) sensiblement dans un deuxième plan horizontal;
un moyen de commande (88) pour commander ledit ensemble de bande transporteuse (14) et lesdits moyens de découpage en tranches (16, 18); et
un moyen de temporisation pour synchroniser ledit premier moyen de découpage en tranches (16) et ledit deuxième moyen de découpage en tranches (18) et ledit ensemble de bande transporteuse (14) de telle sorte que ledit deuxième ensemble de tranches d'aliments (50; 62) soit fourni par ledit deuxième moyen de découpage en tranches (18) pour recouvrir ledit premier ensemble de tranches d'aliments (48; 60);
par lequel ledit premier moyen de découpage en tranches (16) et ledit deuxième moyen de découpage en tranches (18) composent un mets garni (46) ayant une pluralité de couches empilées (48, 50; 60, 62) dans laquelle chaque couche comporte des tranches d'aliments disposées sensiblement dans un même plan horizontal.

2. Système selon la revendication 1, comprenant en outre:
un moyen de fourniture de papier (12) pour fournir une feuille ou bande continue de papier (13) sur ledit ensemble de bande transporteuse (14), l'extrémité d'alimentation dudit ensemble de bande transporteuse (14) comportant un moyen d'alimentation pour alimenter ledit papier (13) provenant de ladite fourniture de papier (12) et sur ledit ensemble de bande transporteuse (14); ledit premier moyen de découpage en tranches (16) étant configuré pour déposer ledit premier ensemble de tranches d'aliments (50; 62) sur ladite feuille ou bande de papier (13).

3. Système selon la revendication 2, comprenant en outre:
un moyen de coupe (28) disposé en aval dudit deuxième moyen de découpage en tranches (18) et le long dudit ensemble de bande transporteuse (14) pour couper ledit papier (13) pour séparer ainsi chaque dit mets (46), ledit moyen de coupe (28) étant associé opérationnellement audit moyen de temporisation pour couper ledit papier (13) à une longueur prédéterminée pour chaque mets (46), ledit moyen de coupe (28) comportant un couteau (108) placé au-dessus dudit ensemble de bande transporteuse (14) pour trancher ledit papier (13) au fur et à mesure que chaque mets (46) est acheminé sous lui, ledit couteau (108) coupant ledit papier (13) pour laisser un rabat (124) de papier de longueur suffisante pour le replier sur ledit mets (46);
un moyen d'enveloppement associé audit moyen de coupe (28) pour replier ledit rabat (124) sur ledit mets (46);
un moyen d'empilage (30) placé en aval dudit moyen d'enveloppement pour empiler ledit mets (46) après que le dit rabat (124) ait été replié sur ledit mets (46); et
un moyen d'emballage (34) associé audit moyen d'empilage (30) pour emballer ledit mets (46) après son empilage.

4. Système selon la revendication 3, dans lequel ledit moyen d'enveloppement (28) comporte en outre une source d'air (122) pour fournir un flot d'air dirigé vers le haut pour soulever ledit rabat (124) et un moyen de pliage (130) pour replier ledit rabat (124) sur ledit mets (46), ledit moyen de pliage (130) comportant un rouleau de pliage (128) placé au-dessus de ladite bande transporteuse (14) pour replier ledit rabat (124) sur ledit mets (46) au fur et à mesure que ledit mets (46) est acheminé le long dudit ensemble de bande transporteuse (14).

5. Système selon l'une quelconque des revendications 1 à 4, dans lequel ledit ensemble de bande transporteuse (14) comporte une bande transporteuse continue allant dudit premier moyen de découpage en tranches (16) jusqu'au deuxième moyen de découpage en tranches (18) et au-delà.

6. Système selon l'une quelconque des revendications 1 à 5, dans lequel ledit moyen de commande (88) est une commande par arbre de renvoi (86) pour commander simultanément ledit ensemble de bande transporteuse (14) et lesdits moyens de découpage en tranches (16, 18).

7. Système selon l'une quelconque des revendications 1 à 6. comprenant en outre:
un troisième moyen de découpage en tranches (20), un quatrième moyen de découpage en tranches (22), un cinquième moyen de découpage en tranches (24) et un sixième moyen de découpage en tranches (26) placés en série le long dudit ensemble de bande transporteuse (14) en aval dudit deuxième moyen de découpage en tranches (18) pour fournir en série des couches supplémentaires de tranches d'aliments (52, 54, 56, 58; 64, 66, 68, 70), lesdits troisième moyen de découpage en tranches (20), quatrième moyen de découpage en tranches (22), cinquième moyen de découpage en tranches (24) et sixième moyen de découpage en tranches (26) étant confiqurés pour fournir une troisième couche (52; 64), une quatrième couche (54, 66), une cinquième couche (56; 68) et une sixième couche (58; 70), respectivement, de telle sorte que chaque couche repose sensiblement sur un même plan horizontal sur ledit mets (46).

8. Système selon l'une quelconque des revendications 1 à 7, dans lequel chaque moyen de découpage en tranches (16, 18, 20, 22, 24, 26) comporte en outre une boîte mobile (74) fixée à un châssis (72) et placée au-dessus dudit ensemble de bande transporteuse (14), ladite boîte (74) étant équipée pour contenir de multiples aliments, et une lame à trancher (82) placée sous ladite boîte (74) et au-dessus dudit ensemble de bande transporteuse (14), ladite lame à trancher (82) s'étendant en travers dudit ensemble de bande transporteuse (14) perpendiculairement à la trajectoire de déplacement de celle-ci, ladite lame (82) étant de longueur suffisante pour trancher simultanément plus d'un aliment à l'intérieur de la boîte (74).

9. Procédé de préparation automatique de mets garnis (46), comprenant:
le découpage en tranches d'un premier ensemble d'aliments à un premier poste de découpage en tranches (16) pour fournir une première couche (48; 60) de tranches d'aliments;
le dépôt de ladite première couche (48; 60) sur une bande transporteuse (14) et sensiblement dans un premier plan horizontal;
l'acheminement de ladite première couche (48; 60) jusqu'à un deuxième poste de découpage en tranches (18);
le découpage en tranches d'un deuxième ensemble d'aliments audit deuxième poste de découpage en tranches (18) pour former une deuxième couche (50; 62) de tranches d'aliments;
l'empilage de ladite deuxième couche (50; 62) directement par dessus ladite première couche (48; 60) et sensiblement dans un deuxième plan horizontal;
l'enveloppement desdites première et deuxième couches (48, 50; 60, 62) après ledit empilage de celles-ci; et
l'emballage desdites première et deuxième couches (48, 50; 60, 62) après leur enveloppement.

10. Procédé selon la revendication 9, dans lequel ledit découpage en tranches dudit premier ensemble d'aliments comporte le chargement d'un ou plusieurs aliments dans une première boîte (74), ladite première boîte étant placée au-dessus d'une première lame à trancher (16) et se déplaçant par rapport à une lame à trancher (82);
le placement desdits aliments à l'intérieur de ladite première boîte (74) côte à côte pour exposer une extrémité de chaque dit aliment pour qu'elle soit tranchée par ladite lame à trancher (82); et
le découpage en tranches de ladite extrémité de chaque dit aliment à l'intérieur de ladite boîte (74) pour former ladite première couche (48; 60).

11. Procédé selon la revendication 9 ou la revendication 10, dans lequel ledit acheminement de ladite première couche (48; 60) jusqu'audit deuxième poste de découpage en tranches (18) s'effectue sur une bande transporteuse à arbre de renvoi (14).

12. Procédé selon l'une quelconque des revendications 9 à 11, dans lequel ledit découpage en tranches dudit deuxième ensemble d'aliments comporte le chargement d'un ou plusieurs aliments dans une deuxième boîte mobile, ladite deuxième boîte étant placée au-dessus d'une deuxième lame à trancher et se déplaçant par rapport à ladite lame à trancher;
le placement desdits aliments à l'intérieur de ladite deuxième boîte côte à côte pour exposer une extrémité de chaque dit aliment pour qu'elle soit tranchée par ladite deuxième lame à trancher;
le découpage en tranches de ladite extrémité de chaque dit aliment à l'intérieur de ladite deuxième boîte pour former ladite deuxième couche (50; 62).

13. Procédé selon l'une quelconque des revendications 9 à 12, comprenant en outre
la fourniture d'une bande de papier continue (13);
l'acheminement de ladite bande de papier continue (13) sur une bande transporteuse (14) jusqu'au dit premier poste de découpage en tranches (16);
le dépôt de ladite première couche (48; 60) sur ledit papier (13);
l'acheminement de ladite première couche (48; 60) et dudit papier (13) sur ladite bande transporteuse (14) jusqu'audit deuxième poste de découpage en tranches (18) et le dépôt de ladite deuxième couche (50; 62) sur ladite première couche (48; 60);
la coupe de ladite bande de papier (13) pour laisser un rabat (124) dudit papier de longueur suffisante pour pouvoir être replié sur lesdites couches (48, 50; 60, 62) pour envelopper celles-ci; et
l'enveloppement desdites couches (48, 50; 60, 62) avec ledit papier après la coupe de celui-ci.

14. Procédé selon la revendication 13, dans lequel ledit enveloppement comporte la fourniture d'un flot d'air dirigé vers le haut pour soulever ledit rabat (124) d'une position sensiblement horizontale à une position inclinée verticalement; et l'application d'un rouleau (128) sur ledit rabat (124), ladite première couche (48; 60) et ladite deuxième couche (50; 62) quand ledit rabat (124) est dans ladite position inclinée verticalement pour replier ainsi ledit rabat (124) sur lesdites couches (48, 50; 60, 62).
